# EUROPÄISCHE PATENTSCHRIFT

(11) **EP 4 396 495 B1**
(45) Veröffentlichungstag und Bekanntmachung des Hinweises auf die Patenterteilung: **11.11.2026**
(21) Anmeldenummer: 22772799.7
(22) Anmeldetag: 17.08.2022
(51) Int. Cl.: F21S 43/14, F21S 43/20, G02B 5/02, G02B 3/08, F21S 43/15, G02B 5/04

(54) **BELEUCHTUNGSVORRICHTUNG FÜR FAHRZEUGE**
ILLUMINATION DEVICE FOR VEHICLES
DISPOSITIF D'ÉCLAIRAGE POUR VÉHICULES

(30) Priorität: 31.08.2021 DE 102021122451
(43) Veröffentlichungstag der Anmeldung: 10.07.2024
(73) Patentinhaber: HELLA GmbH & Co. KGaA, 59552 Lippstadt (DE)
(72) Erfinder: SCHÖNE, Michael, 59555 Lippstadt (DE)
(74) Vertreter: Behr-Wenning, Gregor
(86) Internationale Anmeldenummer: PCT/EP2022/072896
(87) Internationale Veröffentlichungsnummer: WO 2023/030878

(56) Entgegenhaltungen:
- EP-A1- 0 984 220
- EP-A1- 3 534 063
- DE-A1- 102018 129 596
- DE-B4- 102005 031 777
- FR-A1- 3 045 781
- FR-A1- 3 101 695
- JP-U- H03 106 605
- JP-U- S57 122 611
- JP-U- S6 190 104
- US-A1- 2021 062 994

## Beschreibung

Die Erfindung betrifft eine Beleuchtungsvorrichtung für Fahrzeuge mit einer Mehrzahl von Lichtquellen, mit einer in Hauptabstrahlrichtung vor den Lichtquellen angeordneten Lichtscheibe und mit einer zwischen den Lichtquellen und der Lichtscheibe angeordneten Optikelementanordnung.

Aus der DE 10 2005 031 777 A1 ist eine Beleuchtungsvorrichtung für Fahrzeuge bekannt, bei der einer Lichtquelle ein Optikelement zugeordnet ist, das auf einer der Lichtquelle zugewandten Lichteintrittsseite eine Mehrzahl von Prismen aufweist. Das Optikelement ist auf einer der Lichtquelle abgewandten Lichtaustrittsseite glatt ausgebildet. Das Optikelement weist eine konstante Wandstärke auf und ist auf der Lichteintrittsseite konkavförmig ausgebildet. Ein von der Lichtquelle abgestrahltes Licht tritt an einer Flanke der Prismenelemente ein und wird an einer gegenüberliegenden Flanke desselben Prismenelementes total reflektiert. Lichtaustrittsseitig erfolgt eine parallele Lichtabstrahlung. Um eine gute Vergleichmäßigung der abgegebenen Leuchtdichte zu erreichen, verringert sich eine Breite der quer zu einer Hauptabstrahlachse der Lichtquelle nach außen hin verlaufenden Prismen kontinuierlich. Wünschenswert ist, den Grad der Vergleichmäßigung zur Erlangung eines homogenen Erscheinungsbildes der Beleuchtungsvorrichtung kostengünstig zu verbessern.

Um das homogene Erscheinungsbild mit einer relativ hohen Vergleichmäßigung der abgegebenen Leuchtdichte bauraumsparend, d. h. mit einer geringen Bautiefe, zu erreichen, ist es bekannt, eine Vielzahl von Lichtquellen, insbesondere LED-Lichtquellen, nebeneinander und gegebenenfalls mit denselben zugeordneten Mikrooptikelementen anzuordnen. Beide Varianten sind relativ teuer und aufwendig. Eine Beleuchtungsvorrichtung mit Lichtquellen, denen jeweils Mikrooptikelemente zugeordnet sind, ist beispielsweise aus der DE 10 2018 125 438 A1 bekannt.

Aus der JP H03 106605 U ist eine Beleuchtungsvorrichtung mit einer Mehrzahl von Lichtquellen sowie einer Lichtscheibe und einer zwischen der Lichtscheibe und den Lichtquellen angeordneten Zwischenlichtscheibe bekannt, bei der die Zwischenlichtscheibe lichteintrittsseitig eine konvexe Form aufweist.

Aus der DE 10 2005 031 777 B4 ist eine Beleuchtungsvorrichtung für Fahrzeuge mit einer Optikelementanordnung bekannt. Die Optikelementanordnung umfasst eine Zwischenlichtscheibe, die lichteintrittsseitig bogenförmige Prismenabschnitte aufweist. Diese Prismenabschnitte weisen keine ebenen Abschnitte im Bereich der Hauptachse der Lichtquelle auf. Ferner weist die Zwischenlichtscheibe lichtaustrittsseitig eine optikfreie Oberfläche auf, so dass im Unterschied zum Anmeldungsgegenstand keine Streuung des aus der Zwischenlichtscheibe austretenden Lichtes ermöglicht wird.

Aus der EP 3 534 063 A1 ist eine Beleuchtungsvorrichtung für Fahrzeuge mit einer Mehrzahl von Lichtquellen und einer Optikelementanordnung bekannt. Die Optikelementanordnung ist zwischen der Mehrzahl von Lichtquellen und einer die Beleuchtungsvorrichtung abdeckenden Lichtscheibe angeordnet. Die Optikelementanordnung weist eine Zwischenlichtscheibe auf, die auf einer den Lichtquellen zugewandten Lichteintrittsseite eine Mehrzahl von Prismen zur Sammlung des von den Lichtquellen abgestrahlten Lichtes aufweist. Auf einer den Lichtquellen abgewandten Lichtaustrittsseite weist die Zwischenlichtscheibe eine Mehrzahl von Erhebungen auf zum Streuen aus der Zwischenlichtscheibe austretenden Lichtes. Die lichteintrittsseitig angeordneten Prismen der Zwischenlichtscheibe erstrecken sich durchgehend über die gesamte Fläche der Lichteintrittsseite. Eine Grundfläche der Zwischenlichtscheibe ist eben ausgebildet. Zwischen den Lichtquellen und der Zwischenlichtscheibe ist eine zusätzliche Lichtscheibe angeordnet, mittels derer das von den Lichtquellen abgestrahlte Licht gestreut wird.

Aufgabe der vorliegenden Erfindung ist es daher, eine Beleuchtungsvorrichtung für Fahrzeuge derart weiterzubilden, dass kostengünstig ein homogenes Erscheinungsbild und eine homogene Ausleuchtung bei einem relativ großen Abstand der Lichtquellen und geringer Bautiefe der Beleuchtungsvorrichtung gewährleistet ist.

Zur Lösung dieser Aufgabe weist die Erfindung die Merkmale des Patentanspruchs 1 auf.

Der besondere Vorteil der Erfindung ist, dass kostengünstig eine hohe Vergleichmäßigung einer von der Beleuchtungsvorrichtung abgegebenen Leuchtdichte erzielt wird, wobei die Anzahl der Lichtquellen relativ geringgehalten werden kann. Zusätzlich wirkt sich kostenmindernd aus, dass eine Zwischenlichtscheibe und eine Streulichtscheibe relativ kostengünstig hergestellt werden können. Diese Lichtscheiben weisen einen relativ einfachen Aufbau auf, ohne dass sie Mikrooptiken aufweisen. Die Erfindung ermöglicht flachbauende Beleuchtungssysteme mit einem homogenen gleichmäßigen Erscheinungsbild, wobei die Beleuchtungsvorrichtung mit günstigen Werkzeugen, vorzugsweise durch Spritzgießen, hergestellt werden kann.

Nach der Erfindung ist eine Zwischenlichtscheibe vorgesehen, die auf einer Lichteintrittsseite eine Mehrzahl von Prismen und auf einer Lichtaustrittsseite eine Mehrzahl von Erhebungen aufweist. Durch die Erhebungen erfolgt eine Streuung des durch die Prismen auf der Lichteintrittsseite gesammelten Lichtes. Vorzugsweise wird die in Lichtstromrichtung vor der Zwischenlichtscheibe angeordnete Streulichtscheibe hierdurch gleichmäßig ausgeleuchtet. Die Lichtstromrichtung nachgelagerte Streulichtscheibe dient als lichtstreuendes Element, wodurch die Gleichmäßigkeit der Lichtabstrahlung weiter verbessert wird.

Nach der Erfindung sind die eine Mehrzahl von Prismen aufweisenden Prismenabschnitte und/oder konkavförmig ausgebildet, so dass eine Lichtausbeute der demselben zugeordneten Lichtquellen verbessert wird.

Nach einer Weiterbildung der Erfindung liegt ein Abstand benachbarter Lichtquellen im Bereich eines Abstandes der Streulichtscheibe zu den vorzugsweise in einer Ebene verlaufenden Lichtquellen. Die Ebene der Lichtquellen verläuft vorzugsweise parallel zu einer Erstreckungsebene der Streulichtscheibe.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Fig. 1: einen schematischen Querschnitt durch eine erfindungsgemäße Beleuchtungsvorrichtung und
- Fig. 2: ein vergrößerter Ausschnitt einer Zwischenlichtscheibe der Beleuchtungsvorrichtung gemäß Figur 1.

Eine erfindungsgemäße Beleuchtungsvorrichtung für Fahrzeuge dient zur Erzeugung eines homogenen Erscheinungsbildes mit einer über die Fläche gleich abgebenden Leuchtdichte.

Die erfindungsgemäße Beleuchtungsvorrichtung ist als eine flache Baueinheit ausgebildet mit einer Tiefe im Bereich von 25 mm bis 35 mm.

Die Beleuchtungsvorrichtung weist in einer Erstreckungsebene E eine Mehrzahl von Lichtquellen 1 auf, wobei benachbarte Lichtquellen 1 vorzugsweise in einem gleichen Abstand s angeordnet sind. Die Lichtquellen 1 können matrixartig und/oder entsprechend eines Gitters angeordnet sein.

Ferner weist die Beleuchtungsvorrichtung in Hauptabstrahlrichtung H vor den Lichtquellen 1 eine Zwischenlichtscheibe 2 (Optikelementanordnung) und eine Streulichtscheibe 3 (Lichtscheibe) auf. Die Zwischenlichtscheibe 2 ist zwischen den Lichtquellen 1 bzw. der Erstreckungsebene E der Lichtquellen 1 einerseits und der Streulichtscheibe 3 andererseits angeordnet.

Die Streulichtscheibe 3 dient als Lichtscheibe, von der aus das homogene Licht der Beleuchtungsvorrichtung abgestrahlt wird. Die Zwischenlichtscheibe 2 ist eine Optikelementanordnung zur Vorformung und Vergleichmäßigung des von den Lichtquellen 1 abgestrahlten Lichtes.

Die Zwischenlichtscheibe 2 weist auf einer den Lichtquellen 1 zugewandten Lichteintrittsseite 4 eine Mehrzahl von Prismen 5 auf zur Sammlung des von den Lichtquellen 1 abgestrahlten Lichtes. Auf einer den Lichtquellen 1 abgewandten Lichtaustrittsseite 6 der Zwischenlichtscheibe 2 ist eine Mehrzahl von Erhebungen 7 angeordnet zum Streuen des von den Prismen 5 kommenden Lichtes.

Die Streulichtscheibe 3 besteht aus einem volumenstreuenden Material, so dass das von der Zwischenlichtscheibe 2 auf die Streulichtscheibe 3 treffende Licht weiter vergleichmäßigt bzw. gestreut wird.

Nach einer nicht dargestellten Ausführungsform der Erfindung kann die Streulichtscheibe 3 alternativ oder zusätzlich auf einer der Zwischenlichtscheibe 2 zugewandten Lichteintrittsseite und/oder auf einer der Zwischenlichtscheibe 2 abgewandten Lichtaustrittsseite eine Streustrukturierung aufweisen.

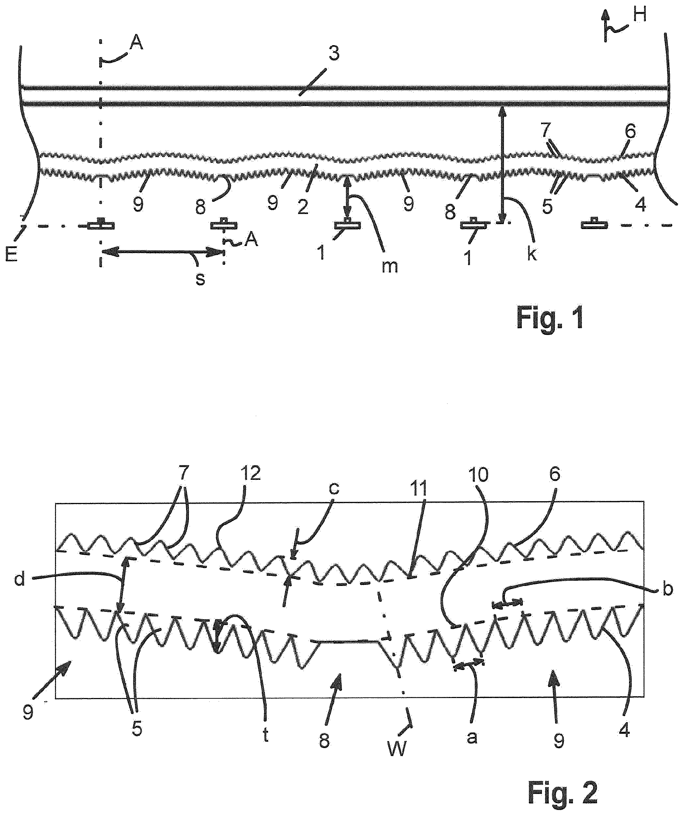

Wie aus Figur 1 zu ersehen ist, verlaufen Hauptachsen A der Lichtquellen 1 in Hauptabstrahlrichtung H sowie im Wesentlichen senkrecht zu einer Erstreckungsebene der Streulichtscheibe 3.

Die Zwischenlichtscheibe 2 weist auf der Lichteintrittsseite 4 im Bereich der Hauptachse A der Lichtquellen 1 einen vorzugsweise ebenen Abschnitt 8 auf, der vorzugsweise senkrecht zu der Hauptachse A der Lichtquellen 1 verläuft. Der ebene Abschnitt 8 schneidet die Hauptachse A der jeweils in Hauptabstrahlrichtung H hinter denselben angeordneten Lichtquellen 1. Ein Abstand m der Lichtquelle 1 zu dem ebenen Abschnitt 8 der Zwischenlichtscheibe 2 ist kleiner als der Abstand s der benachbarten Lichtquellen 1 zueinander. Im vorliegenden Ausführungsbeispiel beträgt der Abstand m zwischen der Lichtquelle 1 und der Zwischenlichtscheibe 2 in einem Bereich zwischen 5 mm bis 10 mm, beispielsweise 7 mm. Der Abstand s benachbarter Lichtquellen 1 liegt in einem Bereich zwischen 15 mm und 25 mm, beispielsweise 20 mm.

Zwischen den lichteintrittsseitig angeordneten benachbarten ebenen Abschnitten 8 der Zwischenlichtscheibe 2 erstrecken sich jeweils Prismenabschnitte 9, die die Mehrzahl von Prismen 5 aufweisen. Die Prismenabschnitte 9 sind bogenförmig und/oder konkavförmig ausgebildet. Sie weisen eine Breite b im Bereich von 0,8 mm bis 1,5 mm auf.

Die Prismen 5 weisen jeweils eine Tiefe t im Bereich von 0,8 mm bis 1,5 mm, beispielsweise 1 mm, auf.

Die Prismen 5 sind unmittelbar nebeneinander angeordnet, so dass ein Spitzenabstand a benachbarter Prismen 5 in einem Bereich von 0,8 mm bis 1,5 mm, beispielsweise 1 mm, liegt.

Die Prismen 5 weisen jeweils eine erste Flanke und eine zweite Flanke auf, wobei bezogen auf eine Lichtquelle 1 an der ersten Flanke Licht eintritt und an der zweiten Flanke desselben Prismas eingetretenes Licht totalreflektiert wird in Richtung der Lichtaustrittsseite 6 der Zwischenlichtscheibe 2. Die erste Flanke und die zweite Flanke der Prismen 5 sind vorzugsweise bezüglich einer Winkelhalbierenden W gleich bzw. symmetrisch ausgebildet.

Die Prismen 5 erheben sich jeweils von einer den Lichtquellen 1 zugewandten ersten Grundfläche 10 und die Erhebungen 7 erheben sich jeweils von einer den Lichtquellen 1 abgewandten zweiten Grundfläche 11 der Zwischenlichtscheibe 2. Ein Abstand d der ersten Grundfläche 10 zu der zweiten Grundfläche 11 ist vorzugsweise konstant und liegt in einem Bereich zwischen zwei und vier Millimeter.

Die an der Lichtaustrittsseite 6 der Zwischenlichtscheibe 2 angeordneten Erhebungen 7 sind konusförmig ausgebildet mit einer bogenförmigen Spitze 12. Die Erhebungen 7 bilden jeweils einen Kegelstumpf mit sich zu einer Spitze verjüngenden Mantelfläche.

Eine Tiefe c der Erhebungen ist vorzugsweise kleiner als eine Tiefe t der Prismen 5. Die Tiefe c der Erhebungen kann im Bereich zwischen 0,4 mm bis 0,6 mm mal der Tiefe t der Prismen 5 liegen. Alternativ oder zusätzlich kann die Tiefe c der Erhebungen 7 im Bereich von 0,4 mm bis 0,6 mm liegen

Nach einer nicht dargestellten alternativen Ausführungsform der Erfindung können die Erhebungen 7 auch zylinderförmig ausgebildet sein. Nach einer weiteren alternativen Ausführungsform der Erfindung können die Erhebungen 7 auch eine eben ausgebildete Spitze aufweisen.

Wie aus Figur 1 ersichtlich ist, beträgt eine in einer senkrecht zur Hauptabstrahlrichtung H angeordneten Ebene projizierten Länge der Prismenabschnitte 9 im Bereich eines Abstandes s der benachbarten Lichtquellen 1 und/oder im Bereich eines Abstandes k der Lichtquellen 1 zu der Streulichtscheibe 3. Die projizierte Länge der Prismenabschnitte 9 liegt somit in einem Bereich zwischen 15 mm und 25 mm, vorzugsweise 20 mm.

Da die Prismenabschnitte 9 gleich ausgebildete Prismen 5 aufweisen, kann jeder Prismenabschnitt 9 Licht von zumindest zwei benachbarten Lichtquellen 1 aufnehmen. Die Lichtquellen 1 befinden sich in Höhe der ebenen Abschnitte 8, wobei die ebenen Abschnitte 8 einen Zwischenbereich zwischen benachbarten Prismenabschnitten 9 bilden.

Alternativ kann der Abschnitt 8 auch gekrümmt und/oder strukturiert ausgebildet sein.

Die Lichtquellen 1 befinden sich vorzugsweise auf einem gemeinsamen ebenen Träger, der sich in der Erstreckungsebene E befindet.

Die Erhebungen 7 der Zusatzlichtscheibe 2 können optional mit einer Streustrukturierung versehen sein, beispielsweise mit einer Erodierstruktur. Im vorliegenden Ausführungsbeispiel liegt eine Wandstärke der Streulichtscheibe 3, also der Abstand der Lichteintrittsfläche zu der Lichtaustrittsfläche derselben im Bereich von 2,5 mm.

Die Lichtquellen 1 sind vorzugsweise als LED-Lichtquellen ausgebildet.

### Bezugszeichenliste

- 1: Lichtquellen
- 2: Zwischenlichtscheibe
- 3: Streulichtscheibe
- 4: Lichteintrittsseite
- 5: Prismen
- 6: Lichtaustrittsseite
- 7: Erhebungen
- 8: ebener Abschnitt
- 9: Prismenabschnitte
- 10: 1. Grundfläche
- 11: 2. Grundfläche
- 12: Spitze
- E: Erstreckungsebene
- H: Hauptabstrahlrichtung
- A: Hauptachse
- W: Winkelhalbierende
- a,d,m,s,k: Abstand
- c,t: Tiefe
- b: Breite

## Patentansprüche

1. Beleuchtungsvorrichtung für Fahrzeuge mit einer Mehrzahl von Lichtquellen (1), mit einer in Hauptabstrahlrichtung (H) vor den Lichtquellen (1) angeordneten Lichtscheibe (3) und mit einer zwischen den Lichtquellen (1) und der Lichtscheibe (3) angeordneten Optikelementanordnung (2), wobei die Optikelementanordnung als eine Zwischenlichtscheibe (2) ausgebildet ist, die auf einer den Lichtquellen (1) zugewandten Lichteintrittsseite (4) eine Mehrzahl von Prismen (5) aufweist zur Sammlung des von den Lichtquellen (1) abgestrahlten Lichtes und die auf einer den Lichtquellen (1) abgewandten Lichtaustrittsseite (6) eine Mehrzahl von Erhebungen (7) aufweist zum Streuen des aus der Zwischenlichtscheibe (2) austretenden Lichtes, **dadurch gekennzeichnet,**
- **dass** die Zwischenlichtscheibe (2) auf einer Lichteintrittsseite (4) im Bereich der Hauptachse (A) der Lichtquellen (1) einen ebenen Abschnitt (8) aufweist, der die Hauptachse (A) der jeweils in Hauptabstrahlrichtung (H) hinter denselben angeordneten Lichtquellen (1) schneidet,
- **dass** zwischen den ebenen Abschnitten (8) der Zwischenlichtscheibe (2) Prismenabschnitte (9) verlaufen, die die Mehrzahl von Prismen (5) aufweisen, wobei die Prismenabschnitte (9) bogenförmig und/oder konkavförmig verlaufen,
- **dass** die Optikelementanordnung eine einzige Zwischenlichtscheibe (2) aufweist,
- **dass** die Lichtscheibe (3) als eine Streulichtscheibe ausgebildet ist, die auf einer der Zwischenlichtscheibe (2) zugewandten Lichteintrittsseite und/oder der Zwischenlichtscheibe (2) abgewandten Lichtaustrittsseite eine Streustrukturierung aufweist und/oder aus einem volumenstreuenden Material besteht.

2. Beleuchtungsvorrichtung nach Anspruch 1, **dadurch gekennzeichnet, dass** die benachbarten Prismen (5) einen spitzen Abstand (a) im Millimeterbereich, vorzugsweise im Bereich von 0,8 mm bis 1,5 mm, aufweisen und dass die Prismen (5) eine Tiefe (t) im Bereich von 0,8 mm bis 1,5 mm aufweisen.

3. Beleuchtungsvorrichtung nach Anspruch 1 oder 2, **dadurch gekennzeichnet, dass** eine Breite (b) der Prismen (5) gleich ausgebildet ist.

4. Beleuchtungsvorrichtung nach einem der Ansprüche 1 bis 3, **dadurch gekennzeichnet, dass** die Erhebungen (7) jeweils eine Tiefe (c) aufweisen, die kleiner ist als die Tiefe (t) der Prismen (5).

5. Beleuchtungsvorrichtung nach Anspruch 4, **dadurch gekennzeichnet, dass** die Tiefe (c) der Erhebungen (7) im Bereich von 0,4 mm bis 0,6 mm und/oder im Bereich von 0,4 mm bis 0,6 mm mal der Tiefe (t) der Prismen (5) liegen.

6. Beleuchtungsvorrichtung nach einem der Ansprüche 1 bis 5, **dadurch gekennzeichnet, dass** eine erste Grundfläche (10) der Zwischenlichtscheibe (2) auf der Lichteintrittsseite (4) und eine zweite Grundfläche (11) auf der Lichtaustrittsseite (6) der Zwischenlichtscheibe (2) verläuft, wobei die erste Grundfläche (10) zu der zweiten Grundfläche (11) einen konstanten Abstand (d) aufweist.

7. Beleuchtungsvorrichtung nach einem der Ansprüche 1 bis 6, **dadurch gekennzeichnet, dass** die Erhebungen (7) sich zylinderförmig und/oder konusförmig von der zweiten Grundfläche (11) der Zwischenlichtscheibe (2) abragen.

8. Beleuchtungsvorrichtung nach einem der Ansprüche 1 bis 7, **dadurch gekennzeichnet, dass** die Erhebungen (7) an einem freien Ende eine Spitze (12) aufweisen, die bogenförmig oder eben verläuft.

9. Beleuchtungsvorrichtung nach einem der Ansprüche 1 bis 8, **dadurch gekennzeichnet, dass** eine in eine senkrecht zur Hauptabstrahlrichtung (H) angeordneten Ebene projizierte Länge der Prismenabschnitte (9) in einem Bereich zwischen 15 mm und 25 mm liegt.

10. Beleuchtungsvorrichtung nach einem der Ansprüche 1 bis 9, **dadurch gekennzeichnet, dass** die Lichtquellen (1) auf einem gemeinsamen ebenen Träger angeordnet sind und dass die benachbarten Lichtquellen (1) einen Abstand (s) im Bereich von 15 mm bis 25 mm zueinander aufweisen.

11. Beleuchtungsvorrichtung nach einem der Ansprüche 1 bis 10, **dadurch gekennzeichnet, dass** die Erhebungen (7) der Zwischenlichtscheibe (2) jeweils mit oder ohne einer Streustrukturierung versehen sind.

## Claims

1. An illumination device for vehicles comprising a plurality of light sources (1), a cover lens (3) arranged in front of the light sources (1) in the main beam direction (H), and an optical element assembly (2) arranged between the light sources (1) and the cover lens (3), said optical element assembly being designed as an intermediate cover lens (2) with a plurality of prisms (5) on a light entry side (4) facing towards the light sources (1) to collect the light emitted by the light sources (1) and with a plurality of projections (7) on a light exit side (6) facing away from the light sources (1) to disperse the light emitted from the intermediate cover lens (2), **characterised in that**
- on a light entry side (4) in the area of the main axis (A) of the light sources (1), the intermediate cover lens (2) has a flat section (8) which intersects the main axis (A) of the respective light sources (1) arranged behind them in the main beam direction (H),
- prism sections (9) comprising the plurality of prisms (5) extend between the flat sections (8) of the intermediate cover lens (2), said prism sections (9) having an arc and/or concave shape,
- the optical element assembly has a single intermediate cover lens (2),
- the cover lens (3) is designed as a diffuser which, on a light entry side facing towards the intermediate cover lens (2) and/or a light exit side facing away from the intermediate cover lens (2), has a diffusing structure and/or is made of a volume-diffusing material.

2. An illumination device according to Claim 1, **characterised in that** the adjacent prisms (5) have a peak spacing (a) in the millimetre range, preferably in the range from 0.8 mm to 1.5 mm, and that the prisms (5) have a depth (t) in the range from 0.8 mm to 1.5 mm.

3. An illumination device according to one of Claims 1 or 2, **characterised in that** a width (b) of the prisms (5) is uniform.

4. An illumination device according to one of Claims 1 to 3, **characterised in that** the projections (7) all have a depth (c) that is less than the depth (t) of the prisms (5).

5. An illumination device according to Claim 4, **characterised in that** a the depth (c) of the projections (7) lies in the range from 0.4 mm to 0.6 mm and/or in the range of 0.4 mm to 0.6 mm times the depth (t) of the prisms (5).

6. An illumination device according to one of Claims 1 to 5, **characterised in that** a first base surface (10) of the intermediate cover lens (2) extends on the light entry side (4) and a second base surface (11) extends on the light exit side (6) of the intermediate cover lens (2) with the first base surface (10) having a constant distance (d) from the second base surface (11).

7. An illumination device according to one of Claims 1 to 6, **characterised in that** the projections (7) project in a cylindrical and/or conical shape from the second base surface (11) of the intermediate cover lens (2).

8. An illumination device according to one of Claims 1 to 7, **characterised in that** the projections (7) have a tip (12) at the free end that is arched or flat.

9. An illumination device according to one of Claims 1 to 8, **characterised in that** a length of the prism sections (9) projected onto a plane perpendicular to the main beam direction (H) lies in a range from 15 mm to 25 mm.

10. An illumination device according to one of Claims 1 to 9, **characterised in that** the light sources (1) are arranged on a common flat carrier and **in that** the adjacent light sources (1) have a distance (s) in the range of 15 mm to 25 mm from one another.

11. An illumination device according to one of Claims 1 to 10, **characterised in that** the projections (7) of the intermediate cover lens (2) are each with or without a diffusing structure.

## Revendications

1. Dispositif d'éclairage pour véhicules, comprenant plusieurs sources lumineuses (1), une lentille (3) disposée devant les sources lumineuses (1) dans la direction d'émission principale (H) et un ensemble d'éléments optiques (2) disposé entre les sources lumineuses (1) et la lentille (3), l'ensemble d'éléments optiques étant conçu comme un diffuseur intermédiaire (2) qui comporte, sur un côté d'entrée de la lumière (4) tourné vers les sources lumineuses (1), plusieurs prismes (5) destinés à collecter la lumière émise par les sources lumineuses (1) et qui présente, sur un côté de sortie de la lumière (6) opposé aux sources lumineuses (1), plusieurs protubérances (7) destinées à diffuser la lumière sortant de la lentille intermédiaire (2) **caractérisé en ce que**
- le diffuseur intermédiaire (2) présente, sur un côté d'entrée de la lumière (4) au niveau de l'axe principal (A) des sources lumineuses (1), une section plane (8) qui coupe l'axe principal (A) des sources lumineuses (1) disposé respectivement derrière celles-ci dans la direction d'émission principale (H),
- des sections prismatiques (9) présentant plusieurs prismes (5), s'étendent entre les sections planes (8) du diffuseur intermédiaire (2), les sections prismatiques (9) étant courbes et/ou concaves,
- l'ensemble d'éléments optiques comporte un seul diffuseur intermédiaire (2),
- la lentille (3) est conçue comme un diffuseur qui présente une structure de diffusion sur un côté d'entrée de la lumière orienté vers le diffuseur intermédiaire (2) et/ou sur le côté de sortie de la lumière opposé au diffuseur intermédiaire (2) et/ou **en ce qu'**elle est constituée d'un matériau diffuseur de volume.

2. Dispositif d'éclairage selon la revendication 1 **caractérisé en ce que** les prismes adjacents (5) présentent un écartement pointu (a) de l'ordre du millimètre, de préférence compris entre 0,8 mm et 1,5 mm, et **en ce que** les prismes (5) présentent une profondeur (t) comprise entre 0,8 mm et 1,5 mm.

3. Dispositif d'éclairage selon la revendication 1 ou 2 **caractérisé en ce que** les prismes (5) présentent une largeur (b) identique.

4. Dispositif d'éclairage selon l'une des revendications 1 à 3 **caractérisé en ce que** les protubérances (7) présentent chacune une profondeur (c) inférieure à la profondeur (t) des prismes (5).

5. Dispositif d'éclairage selon la revendication 4 **caractérisé en ce que** la profondeur (c) des protubérances (7) se situe entre 0,4 mm et 0,6 mm et/ou entre 0,4 mm et 0,6 mm fois la profondeur (t) des prismes (5).

6. Dispositif d'éclairage selon l'une des revendications 1 à 5 **caractérisé en ce qu'**une première surface de base (10) du diffuseur intermédiaire (2) s'étend du côté d'entrée de la lumière (4) et une deuxième surface de base (11) du côté de sortie de la lumière (6) du diffuseur intermédiaire (2), la première surface de base (10) se situant à une distance constante (d) de la deuxième surface de base (11).

7. Dispositif d'éclairage selon l'une des revendications 1 à 6 **caractérisé en ce que** les protubérances (7) dépassent de la deuxième surface de base (11) du diffuseur intermédiaire (2) sous forme cylindrique et/ou conique.

8. Dispositif d'éclairage selon l'une des revendications 1 à 7 **caractérisé en ce que** les protubérances (7) présentent à une extrémité libre une pointe (12) de forme courbe ou plane.

9. Dispositif d'éclairage selon l'une des revendications 1 à 8 **caractérisé en ce qu'**une longueur des sections prismatiques (9) projetée sur un plan perpendiculaire à la direction d'émission principale (H) se situe dans une plage comprise entre 15 mm et 25 mm.

10. Dispositif d'éclairage selon l'une des revendications 1 à 9 **caractérisé en ce que** les sources lumineuses (1) sont disposées sur un support plan commun et **en ce que** les sources lumineuses adjacentes (1) sont espacées les unes des autres d'une distance (s) comprise entre 15 mm et 25 mm.

11. Dispositif d'éclairage selon l'une des revendications 1 à 10 **caractérisé en ce que** les protubérances (7) du diffuseur intermédiaire (2) sont dotées ou non chacune d'une structure de diffusion.
